# EUROPÄISCHE PATENTSCHRIFT

(11) **EP 1 085 958 B1**
(45) Veröffentlichungstag und Bekanntmachung des Hinweises auf die Patenterteilung: **31.07.2002**
(21) Anmeldenummer: 99936267.6
(22) Anmeldetag: 14.05.1999
(51) Int. Cl.: B23B 29/02

(54) **EINSPANNUNG EINES WERKZEUGES IN EINER WERKZEUGAUFNAHME**
TOOL FIXING DEVICE IN A TOOL HOLDER
MONTAGE D'UN OUTIL DANS UN RACCORDEMENT D'OUTIL

(30) Priorität: 06.06.1998 DE 19825373
(43) Veröffentlichungstag der Anmeldung: 28.03.2001
(73) Patentinhaber: Weck, Manfred, 52074 Aachen (DE)
(72) Erfinder: Weck, Manfred, 52074 Aachen (DE)
(74) Vertreter: Kohl, Karl-Heinz
(86) Internationale Anmeldenummer: DE9901486
(87) Internationale Veröffentlichungsnummer: WO9964193

(56) Entgegenhaltungen:
- WO-A-99/02294
- US-A- 3 663 116

## Beschreibung

Die Erfindung betrifft eine Einspannung eines Werkzeuges in einer Werkzeugaufnahme nach dem Oberbegriff des Anspruches 1 (siehe US-A-3 663 116).

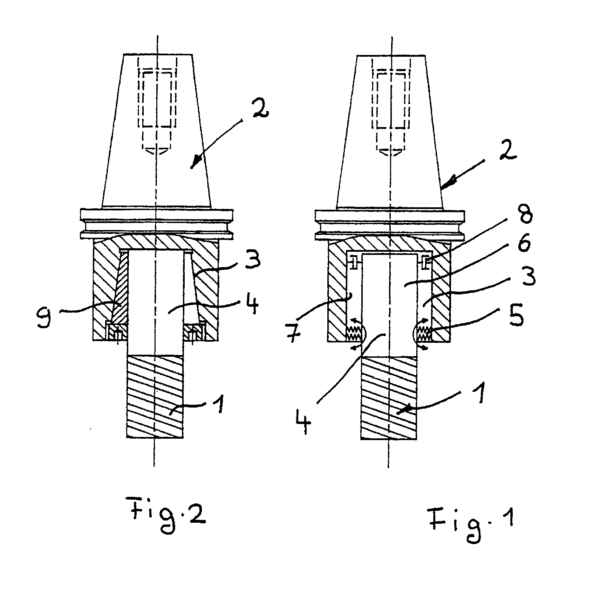

Bei bekannten Einspannungen (Fig. 2) wird ein Schaft 4 eines Werkzeuges 1 in einem Aufnahmeraum 3 einer Werkzeugaufnahme 2 mittels eines in der Werkzeugaufnahme 2 sitzenden Spannkörpers 9 starr eingespannt. Schlanke Werkzeuge, zim Beispiel Schaftfräser oder Bohrstangen, führen wegen ihrer geringen Biegesteifigkeit und Systemdämpfung während der Bearbeitung oft große Schwingungsamplituden aus, die meist in Form eines regenerativen Ratterns auftreten. Diese Schwingungen lassen sich nur durch eine Verringerung der Schnittiefe des Werkzeuges vermeiden. Schlanke Schaftfräser werden beispielsweise zum Taschenfräsen, zum Fräsen von Tiefzieh- und Schmiedewerkzeugen sowie zur Herstellung von Integralbauteilen für den Flugzeugbau eingesetzt. Die Belastungs- und Leistungsgrenze ist die Ratterneigung des Werkzeuges infolge seiner gering gedämpften Biegeeinschwingung.

Aber auch Ausbohroperationen mit Bohrstangen mit einem I/d-Verhältnis > 4 werden durch die Ratterneigung in ihrer Leistungsfähigkeit begrenzt. Dies gilt für stehende Bohrwerkzeuge an Drehmaschinen und für rotierende Ausbohrwerkzeuge an Bohr- und Fräswerken.

Es ist auch eine Einspannung bekannt (US-A-3 663 116), bei der eine Bohrstange aus einem Kern und einer Umhüllung besteht, zwischen denen sich ein Torsionsdämpfer befindet. Der Kern und die Umhüllung sind am Klemmende zusammengeschweißt. Das Schneidelement des Werkzeuges ist am freien Ende der äußeren Umhüllung festgeklemmt. Auch bei dieser Einspannung kann das Werkzeug während der Bearbeitung große Schwingungsamplituden ausführen.

Der Erfindung liegt die Aufgabe zugrunde, die gattungsgemäße Einspannung so auszubilden, daß Ratterschwingungen während der Bearbeitung eines Werkstückes ohne Einschränkung der Belastungsbzw. Leistungsgrenze des Werkzeuges vermieden werden.

Diese Aufgabe wird bei der gattungsgemäßen Einspannung erfindungsgemäß mit den kennzeichnenden Merkmalen des Anspruches 1 gelöst.

Bei der erfindungsgemäßen Einspannung ist in den Kraftfluß zwischen dem Werkzeug und der Werkzeugaufnahme mindestens ein statisch nachgiebiges Element eingefügt, das eine hohe Dämpfung aufweist. Aufgrund dieser gedämpften Einspannung kann das Werkzeug gegenüber der Werkzeugaufnahme federnd nachgeben. Aufgrund der hohen Dämpfung tritt ein Rattern des Werkzeuges nicht auf, selbst wenn es eine große Länge hat und/oder sehr schlank ausgebildet ist. Das entsprechende Dämpferelement wird an der Stelle der größten Relativbewegung zwischen dem Schaftende des Werkzeuges und der Werkzeugaufnahme eingebaut. Infolge der erfindungsgemäßen Einspannung kann der Werkzeugschaft eine Kippbewegung um seine Einspannstelle als Drehpunkt ausführen.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsbeispiele näher beschrieben. Es zeigen
- Fig. 1: in schematischer Darstellung eine erfindungsgemäße Werkzeugeinspannung,
- Fig. 2: in einer Darstellung entsprechend Fig. 1 eine bekannte Werkzeugeinspannung,
- Fig. 3 und Fig. 4: im Axialschnitt zwei unterschiedliche Ausführungsformen von erfindungsgemäßen Werkzeugeinspannungen,
- Fig. 5: eine Gegenüberstellung der Eigenschaften der bekannten und der erfindungsgemäßen Werkzeugeinspannung.

Fig. 1 zeigt schematisch ein Werkzeug 1, das in einer Werkzeugaufnahme 2 aufgenommen ist. Das Werkzeug 1 kann beispielsweise ein Schaftfräser, eine Bohrstange und dergleichen sein. Die Werkzeugaufnahme 2 kann als Steilkegel, HSK, VDI-Schaft und dergleichen ausgebildet sein. Das Werkzeug 1 wird über die Werkzeugaufnahme 2 in einer (nicht dargestellten) Spindel aufgenommen, mit der das Werkzeug 1 drehbar angetrieben wird. Die Werkzeugaufnahme 2 hat einen zylindrischen Aufnahmeraum 3, in den ein Schaft 4 des Werkzeuges 1 ragt. In den Kraftfluß zwischen Werkzeug 1 und Werkzeugaufnahme 2 wird mindestens ein statisch nachgiebiges Element 5 eingefügt, das eine gezielt hohe Dämpfung 8 aufweist. Der Werkzeugschaft 4 kippt um eine federnde Einspannstelle (Drehpunkt). Das freie Schaftende wird hierbei am weitesten radial ausgelenkt. An dieser Stelle der größten Relativbewegung zwischen dem Schaftende 6 und der Innenwandung 7 des Aufnahmeraumes 3 ist mindestens ein Dämpferelement 8 eingebaut. Es ist vorteilhaft ein Squeeze-Film-Dämpfer, kann aber auch beispielsweise ein Gummidämpfer, beispielsweise in Form eines O-Ringes, sein. Über ein nachgiebiges Element 5, das auch eine Membran-, Biegefeder oder ein anderes elastisches Element sein kann, wird der Werkzeugschaft 4 in der Werkzeugaufnahme 2 federweich eingespannt. Der Werkzeugschaft 4 und damit das Werkzeug 1 können dadurch eine Kippbewegung um diese Einspannstelle als Drehpunkt ausführen.

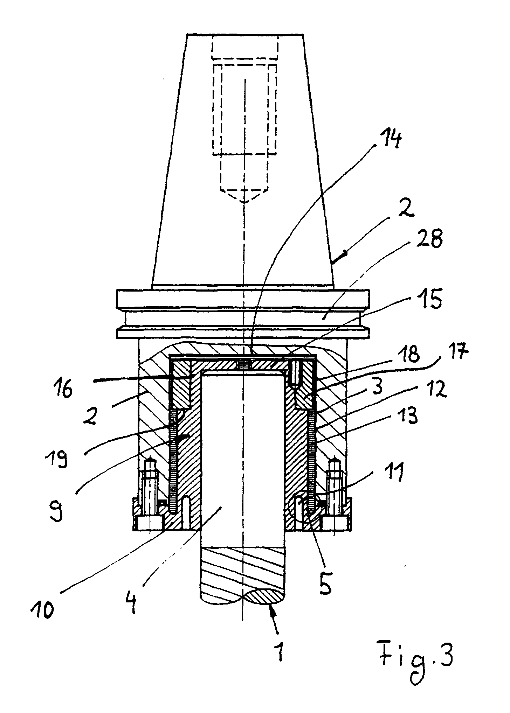

Fig. 3 zeigt ein erstes Ausführungsbeispiel einer solchen Werkzeugeinspannung. Der Schaft 4 des Werkzeuges 1 ist in einer Hülse 9 aufgenommen, die mit einem radial nach außen gerichteten Flansch 10 an der Stirnseite der Werkzeugaufnahme 2 lösbar befestigt ist. In der Hülse 9 ist am freien Ende eine den Schaft 4 mit geringem Abstand umgebende Vertiefung 11 vorgesehen, die zur Stirnseite der Hülse 9 offen ist.

Innerhalb des Aufnahmeraumes 3 der Werkzeugaufnahme 2 ist die Hülse 9 von einem Ringraum 12 umgeben, in dem sich ein Druckmedium 13, vorzugsweise Öl, befindet. Der Ringraum 12 wird radial nach außen durch die Innenwand des Aufnahmeraumes 3 begrenzt. Der Ringraum 12 erstreckt sich geringfügig über die Werkzeugaufnahme 2 bis in den Flansch 10 der Hülse 9.

Die Hülse 9 liegt einem Boden 14 des Aufnahmeraumes 3 mit einem Boden 15 mit geringem axialem Abstand gegenüber. Vom Boden 15 ausgehend ist der Außendurchmesser der Hülse 9 verringert, so daß eine zum Boden 15 offene, umlaufende Vertiefung 16 gebildet wird, in der ein Ring 17 liegt. Der Außendurchmesser des Ringes 17 ist geringfügig kleiner als der Innendurchmesser des Aufnahmeraumes 3, so daß zwischen dem Ring 17 und der Innenwand des Aufnahmeraumes 3 ein schmaler, ringförmiger Dämpfungsspalt 18 gebildet wird, der mit dem Ringraum 12 in Verbindung steht und in dem sich ebenfalls das Druckmedium befindet. Der Ring 17 liegt an einer radial nach außen gerichteten Ringschulter 19 der Hülse 9 an und steht radial über die Außenwandung der Hülse vor. Dadurch ist der Ringraum 12 radial breiter als der Dämpfungsspalt 18.

Da der Ringraum 12 sich axial geringfügig über die Werkzeugaufnahme 2 in den Flansch 10 der Hülse 9 erstreckt, wird zwischen der umlaufenden Vertiefung 11 und dem radial benachbarten Teil des Ringraumes 12 ein schmaler Ringsteg gebildet, der das statisch nachgiebige Element 5 bildet. Das Werkzeug 1 kann aufgrund dieses ringstegförmigen Elementes 5 relativ große Bewegungen gegenüber der Werkzeugaufnahme 2 bei radialer Belastung ausführen. Das Schaftende führt dementsprechend eine relativ große Bewegung aus, so daß im Aufnahmeraum 3 der Werkzeugaufnahme 2 das Dämpfungselement in Form des beschriebenen Öl-Verdrängersystems 12, 18 vorgesehen werden kann. Das im Ringraum 12 sowie im Dämpfungsspalt 18 befindliche Druckmedium 13 ergibt eine hervorragende Dämpfung. Aufgrund der beschriebenen elastischen Werkzeugeinspannung mit der hohen Dämpfung lassen sich Ratterschwingungen des Werkzeuges 1 hervorragend unterdrücken. Die Werkzeugeinspannung ist hervorragend für schlanke Werkzeuge geeignet, die wegen der geringen Biegesteifigkeit und Systemdämpfung während der Bearbeitung oft große Schwingungsamplituden ausführen, die in Form eines regenerativen Ratterns auftreten. Bei Einsatz der beschriebenen Werkzeugeinspannung können große Schnittiefen des Werkzeuges 1 zugelassen werden, ohne daß eine Ratterneigung zu befürchten ist. Auch für Ausbohroperationen mit Bohrstangen als Werkzeug 1 mit einem l/d-Verhältnis > 4 ist die Werkzeugeinspannung hervorragend geeignet. Da eine Ratterneigung aufgrund der elastischen und gedämpften Werkzeugeinspannung nicht auftritt, wird die Leistungsfähigkeit solch langer und dünner Bohrstangen nicht beeinträchtigt.

Anstelle des beschriebenen Druckmedium-Verdrängersystems kann das Schaftende im Aufnahmeraum 3 der Werkzeugaufnahme 2 auch von wenigstens einem Gummielement und dergleichen als statisch nachgiebiges Element umgeben sein. Auch mit solchen mechanischen Bauteilen wird eine hervorragende Dämpfung erzielt.

Die elastische Werkzeugeinspannung führt zwar zu einer geringeren statischen Gesamtsteifigkeit an der Werkzeugspitze in radialer Richtung, jedoch wird bei entsprechender Abstimmung von Einspannsteifigkeit und Dämpfung zwischen der Werkzeugaufnahme 2 und dem Werkzeugschaft 4 die Resonanzerhöhung beträchtlich reduziert, beispielsweise um den Faktor 5 bis 50.

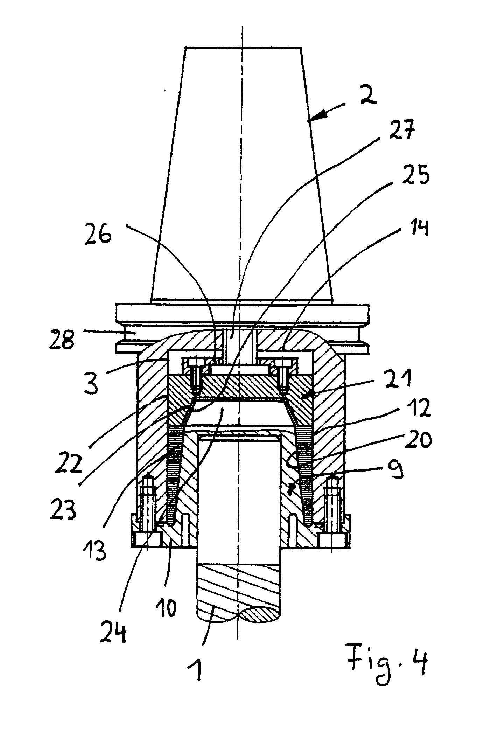

Ist bei besonderen Forderungen, beispielsweise hinsichtlich enger Maßtoleranzen, bei der Bearbeitung durch das Werkzeug 1, die erhöhte statische Nachgiebigkeit durch die elastische Einspannung während der Bearbeitung eines Werkzeuges nicht erlaubt, so kann die Nachgiebigkeit der Einspannung auch ausgeschaltet werden, wobei allerdings dann der Vorteil einer erhöhten Dämpfung nicht mehr gegeben ist. Fig. 4 zeigt ein Ausführungsbeispiel für eine derartige Ausbildung der elastischen Werkzeugeinspannung. Die Hülse 9 ist kürzer als beim vorigen Ausführungsbeispiel und hat einen konischen Mantel 20, dessen Durchmesser in Richtung auf den Flansch 10 der Hülse 9 stetig zunimmt. Dadurch wird zwischen der zylindrischen Innenwand des Aufnahmeraumes 3 der Werkzeugaufnahme 2 und der Hülse 9 ein in Richtung auf den Flansch 10 sich verjüngender Ringraum 12 gebildet, in dem sich das Druckmedium 13, vorzugsweise Öl, befindet. Dieser Ringraum 12 ist in Richtung auf den Boden 14 des Aufnahmeraumes 3 durch eine axial verstellbare Konushülse 21 geschlossen. Sie liegt mit ihrem zylindrischen Außenmantel 22 an der Innenwand des Aufnahmeraumes 3 an. Sie hat in ihrer der Hülse 9 zugewandten Stirnseite eine mittige Vertiefung 23, die sich in Richtung auf die Hülse 9 konisch erweitert und einen entsprechenden konischen Ansatz 24 der Hülse 9 mit geringem Abstand umgibt. Zwischen diesem Ansatz 24 und der Seitenwandung und dem Boden der Vertiefung 23 wird ein Dämpfungsraum 25 gebildet, der spaltförmig ausgebildet und mit dem Ringraum 12 verbunden ist. Dadurch befindet sich auch im Dämpfungsspalt 25 das Druckmedium 13.

Die Konushülse 21 ist an einem Träger 26 befestigt, der am freien Ende einer Stellstange 27 vorgesehen ist. Sie ragt in den Aufnahmeraum 3 und erstreckt sich durch die Werkzeugaufnahme 2. Die Stellstange 27 kann mit einem (nicht dargestellten) Antrieb axial verschoben werden. Dadurch läßt sich die Weite des kegelförmigen Dämpfungsraumes 25 einstellen. Wird die Konushülse 21 aus der Stellung gemäß Fig. 4 nach oben verschoben, vergrößert sich die Weite des konusförmigen Dämpfungsspaltes 25. Dementsprechend wird die Dämpfung, die durch das darin befindliche Druckmedium erreicht wird, geringer, die Gesamtsystemdämpfung nimmt dabei jedoch zu. Wird die Stellstange 27 in der Darstellung gemäß Fig. 4 nach unten verschoben, wird die Spaltweite des Dämpfungsspaltes 25 verringert. Sie kann so weit herabgesetzt werden, daß das Schaftende fest in der Werkzeugaufnahme 2 eingespannt ist. Somit kann durch das Verstellelement in Form der Konushülse 21 die Systemdämpfung an den jeweiligen Einsatzfall optimal angepaßt werden. Wenn vom Bearbeitungsprozeß, zum Beispiel bei einer Präzisionsbearbeitung, eine starre Einspannung des Werkzeuges 1 in der Werkzeugaufnahme 2 gefordert wird, kann durch entsprechende Verringerung der Spaltweite des Dämpfungsspaltes 25 gegen Null das obere Werkzeugende fest eingespannt werden.

Bei beiden Ausführungsformen nach den Fig. 3 und 4 ist der Flansch 10 der Spannhülse 9 gegenüber der Werkzeugaufnahme 2 abgedichtet. Das Druckmedium 13 ist vorzugsweise Hydraulikmedium, das sich in dem abgeschlossenen Raum 13, 18, 25 befindet oder das von der (nicht dargestellten) Bearbeitungsmaschine aus über (nicht dargestellte) Bohrungen zugeführt werden kann. Die Werkzeugaufnahmen 2 sind jeweils mit einer Greifernut 28 für einen Werkzeugwechsler versehen.

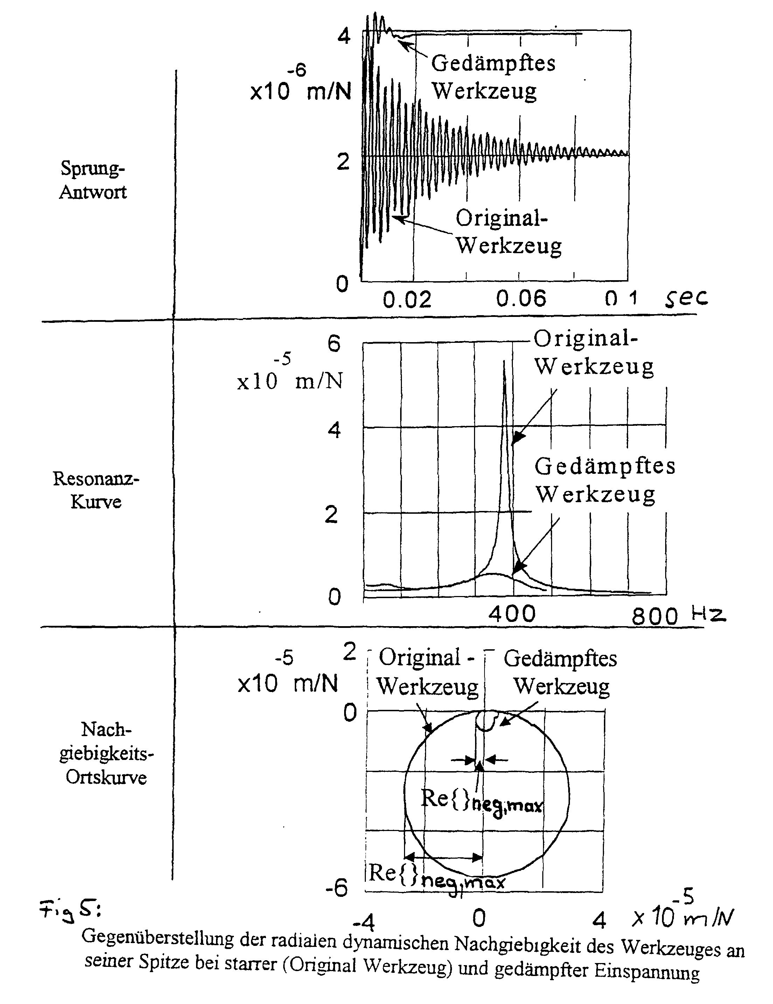

Fig. 5 zeigt in einer Gegenüberstellung die wesentlichen Unterschiede zwischen der bekannten Standard-Einspannung der Werkzeuge, die ungedämpft erfolgt, und der beschriebenen gedämpften Werkzeugeinspannung.

In der oberen Abbildung ist die Sprungantwort in einem Diagramm dargestellt. Bei der ungedämpften Werkzeugeinspannung führt das Werkzeug (Original-Werkzeug) bei der Bearbeitung sehr starke Schwingungen aus, die nur langsam abklingen. Diese ungedämpften Schwingungen führen zum nachteiligen Rattern des Werkzeuges während der Bearbeitung. Völlig andere Verhältnisse liegen bei der gedämpften Werkzeugeinspannung vor. Die Schwingungen des gedämpften Werkzeuges klingen sehr rasch ab, so daß die Gefahr für Rattern des Werkzeuges, selbst wenn es sehr lang und schmal ist, bei der Bearbeitung beträchtlich reduziert wird.

Bei der ungedämpften Werkzeugeinspannung ergibt sich für das Werkzeug eine sehr starke Resonanzüberhöhung, während beim gedämpft eingespannten Werkzeug die Resonanzüberhöhung stark reduziert wird (Bild 5, Mitte).

Entsprechend der Reduktion der Resonanzüberhöhung wird auch der negative Realanteil der Nachgiebigkeitsortskurve bei der gedämpften Werkzeugeinspannung im Vergleich zur ungedämpften Einspannung gravierend verringert. Da die ratterfrei mögliche Schnittiefe sich umgekehrt proportional zu diesem negativen Realanteil (Bild 5, unten) verhält, ergibt sich durch die gedämpfte Werkzeugeinspannung eine enorme Leistungserhöhung, die im dargestellten Ausführungsbeispiel etwa um den Faktor 5 bis 10 höher liegt als bei einem ungedämpft eingespannten Werkzeug.

## Patentansprüche

1. Einspannung eines Werkzeuges (1) in einer Werkzeugaufnahme (2), in deren Aufnahmeraum (3) ein Schaft (4) des Werkzeuges (1) eingespannt ist, wobei zur Dämpfung der Kipp-bzw. Biegeschwingungen des Werkzeuges (1) mindestens ein statisch nachgiebiges Element (5, 8) vorgesehen ist,
**dadurch gekennzeichnet, daß** das statisch nachgiebige Element in den Kraftfluß zwischen dem Werkzeug (1) und der Werkzeugaufnahme (2) eingefügt ist.

2. Einspannung nach Anspruch 1,
**dadurch gekennzeichnet, daß** das statisch nachgiebige Element (5, 8) eine federnde Einspannstelle aufweist.

3. Einspannung nach Anspruch 1 oder 2,
**dadurch gekennzeichnet, daß** das statisch nachgiebige Element (5, 8) zumindest teilweise an einer Spannhülse (9) vorgesehen ist.

4. Einspannung nach Anspruch 3,
**dadurch gekennzeichnet, daß** die Spannhülse (9) eine Wandverschwächung zur Bildung eines Gelenkes aufweist.

5. Einspannung nach Anspruch 3 oder 4,
**dadurch gekennzeichnet, daß** die Wandverschwächung ein Ringsteg der Spannhülse (9) ist.

6. Einspannung nach einem der Ansprüche 1 bis 5,
**dadurch gekennzeichnet, daß** am freien Ende des Schaftes (4) des Werkzeuges (1) im Aufnahmeraum (3) der Werkzeugaufnahme (2) mindestens ein Dämpfungselement (8) vorgesehen ist.

7. Einspannung nach Anspruch 6,
**dadurch gekennzeichnet, daß** das Dämpfungselement (8) ein Squeeze-Film-Dämpfer ist.

8. Einspannung nach Anspruch 6,
**dadurch gekennzeichnet, daß** das Dämpfungselement (8) ein gummielastischer Ring ist.

9. Einspannung nach Anspruch 6,
**dadurch gekennzeichnet, daß** die Feder des Dämpfungselementes (8) eine Membranfeder, eine Biegefeder und dergleichen ist.

10. Einspannung nach Anspruch 6,
**dadurch gekennzeichnet, daß** das Dämpfungselement (8) ein Druckmedium, vorzugsweise Hydrauliköl, aufweist.

11. Einspannung nach Anspruch 10,
**dadurch gekennzeichnet, daß** das Druckmedium (13) in einem die Spannhülse (9) umgebenden Raum (12) untergebracht ist.

12. Einspannung nach Anspruch 11,
**dadurch gekennzeichnet, daß** der Druckmediumraum (12) mit einem Dämpfungsspalt (18, 25) verbunden ist.

13. Einspannung nach Anspruch 12,
**dadurch gekennzeichnet, daß** die Weite des Dämpfungsspaltes (25) einstellbar ist.

14. Einspannung nach Anspruch 13,
**dadurch gekennzeichnet, daß** der Dämpfungsspalt (25) durch einen Druckkörper (21) einstellbar ist.

15. Einspannung nach Anspruch 14,
**dadurch gekennzeichnet, daß** der Druckkörper (21) durch eine die Werkzeugaufnahme (2) axial durchsetzende Stellstange (27) axial verstellbar ist.

## Claims

1. A means for clamping a tool (1) in a tool-receiving means (2), in the receiving space (3) of which a shank (4) of the tool (1) is clamped, wherein at least one statically yielding member (5, 8) is provided for damping the tilting or bending vibrations of the tool (1), **characterized in that** the statically yielding member is inserted in the power flux between the tool (1) and the tool-receiving means (2).

2. A clamping device according to Claim 1, **characterized in that** the statically yielding member (5, 8) has a resilient clamping point.

3. A clamping device according to Claim 1 or 2, **characterized in that** the statically yielding member (5, 8) is provided at least in part on a clamping sleeve (9).

4. A clamping device according to Claim 3, **characterized in that** the clamping sleeve (9) has a wall portion of reduced thickness in order to form a joint.

5. A clamping device according to Claim 3 or 4, **characterized in that** the wall portion of reduced thickness is an annular web of the clamping sleeve (9).

6. A clamping device according to one of Claims 1 to 5, **characterized in that** at least one damping member (8) is provided at the free end of the shank (4) of the tool (1) in the receiving space (3) of the tool-receiving means (2).

7. A clamping device according to Claim 6, **characterized in that** the damping member (8) is a squeeze-film damper.

8. A clamping device according to Claim 6, **characterized in that** the damping member (8) is a rubber-elastic ring.

9. A clamping device according to Claim 6, **characterized in that** the spring of the damping member (8) is a diaphragm spring, a flexural spring and the like.

10. A clamping device according to Claim 6, **characterized in that** the damping member (8) comprises a pressure medium, preferably hydraulic oil.

11. A clamping device according to Claim 10, **characterized in that** the pressure medium (13) is contained in a chamber (12) surrounding the clamping sleeve (9).

12. A clamping device according to Claim 11, **characterized in that** the pressure-medium chamber (12) is connected to a damping gap (18, 25).

13. A clamping device according to Claim 12, **characterized in that** the width of the damping gap (25) is adjustable.

14. A clamping device according to Claim 13, **characterized in that** the damping gap (25) is adjustable by a pressure body (21).

15. A clamping device according to Claim 14, **characterized in that** the pressure body (21) is axially displaceable by an adjusting rod (27) passing axially through the tool-receiving means (2).

## Revendications

1. Dispositif de serrage d'un outil dans un logement d'outil (2), dans la chambre de logement (30) duquel est serrée une tige (4) de l'outil (1), au moins un élément (5, 8) flexible de façon statique étant prévu pour l'amortissement des oscillations de basculement ou de flexion de l'outil (1), **caractérisé en ce que** l'élément flexible de façon statique est inséré dans le flux de force entre l'outil (1) et le logement d'outil (2).

2. Dispositif de serrage selon la revendication 1, **caractérisé en ce que** l'élément flexible de façon statique (5, 8) comporte un point de serrage élastique.

3. Dispositif de serrage selon la revendication 1 ou 2, **caractérisé en ce que** l'élément flexible du point de vue statique (5, 8) est prévu au moins en partie sur la douille de serrage (9).

4. Dispositif de serrage selon la revendication 3, **caractérisé en ce que** la douille de serrage (9) présente un affaiblissement de paroi servant à former une articulation.

5. Dispositif de serrage selon la revendication 3 ou 4, **caractérisé en ce que** l'affaiblissement de paroi est une barrette annulaire de la douille de serrage (9).

6. Dispositif de serrage selon l'une des revendications 1 à 5, **caractérisé en ce qu'**au moins un élément d'amortissement (8) est prévu sur l'extrémité libre de la tige (4) de l'outil (1) dans l'espace de logement (3) du logement d'outil (2).

7. Dispositif de serrage selon la revendication 6, **caractérisé en ce que** l'élément d'amortissement (8) est un amortisseur à squeeze-film.

8. Dispositif de serrage selon la revendication 6, **caractérisé en ce que** l'élément d'amortissement (8) est une bague présentant l'élasticité du caoutchouc.

9. Dispositif de serrage selon la revendication 6, **caractérisé en ce que** le ressort de l'élément d'amortissement (8) est un ressort à membrane, un ressort de flexion ou analogue.

10. Dispositif de serrage selon la revendication 6, **caractérisé en ce que** l'élément d'amortissement (8) comporte un fluide sous pression, de préférence de l'huile hydraulique.

11. Dispositif de serrage selon la revendication 10, **caractérisé en ce que** le fluide sous pression (13) est logé dans une chambre (12) entourant la douille de serrage (9).

12. Dispositif de serrage selon la revendication 11, **caractérisé en ce que** la chambre (12) pour le fluide sous pression est reliée à une fente d'amortissement (18, 25).

13. Dispositif de serrage selon la revendication 12, **caractérisé en ce que** la largeur de la fente d'amortissement (25) est réglable.

14. Dispositif de serrage selon la revendication 13, **caractérisé en ce que** la fente d'amortissement (25) est réglable au moyen d'un corps de pression (21).

15. Dispositif de serrage selon la revendication 14, **caractérisé en ce que** le corps de serrage (21) est réglable axialement au moyen d'une tige de réglage (27) qui traverse axialement le logement d'outil (2).
